# EUROPÄISCHE PATENTSCHRIFT

(11) **EP 2 142 454 B1**
(45) Veröffentlichungstag und Bekanntmachung des Hinweises auf die Patenterteilung: **30.05.2012**
(21) Anmeldenummer: 08734658.1
(22) Anmeldetag: 19.03.2008
(51) Int. Cl.: B65G 25/02, B65G 57/03, B65G 59/06

(54) **BELADE- UND PALETTIERVORRICHTUNG FÜR ROLLWAGEN UND ZUGEHÖRIGES VERFAHREN**
LOADING AND PALLETIZING DEVICE FOR ROLL WAGONS, AND RELATED METHOD
DISPOSITIF DE CHARGEMENT ET DE PALETTISATION POUR CHARIOTS ROULANTS ET PROCÉDÉ ASSOCIÉ

(30) Priorität: 30.03.2007 DE 102007015751
(43) Veröffentlichungstag der Anmeldung: 13.01.2010
(73) Patentinhaber: KHS GmbH, 44143 Dortmund (DE)
(72) Erfinder: RÜBSAAMEN, Martin, 67098 Bad Dürkheim (DE); JUNGHANS, Joachim, 60326 Frankfurt (DE); SCHMITT, Stefan, 67593 Bermersheim (DE)
(86) Internationale Anmeldenummer: PCT/EP2008/002176
(87) Internationale Veröffentlichungsnummer: WO 2008/119468

(56) Entgegenhaltungen:
- EP-A- 0 251 439
- EP-A- 1 149 753
- DE-A1- 3 442 111
- US-A- 4 567 979
- US-A- 5 195 630

## Beschreibung

Erfindung betrifft eine Belade- und Palettiervorrichtung für Rollwagen, insbesondere so genannte Dollies (Dolly), umfassend mindestens eine mit mindestens einer Führungsschiene ausgestattete Transportstrecke, in welcher Rollwagen verfahrbar sind, eine Beladestation für Rollwagen, in welcher Waren auf mindestens zwei hintereinander stehende Rollwagen gleichzeitig aufgestapelt werden können und eine Überleitstation, wobei in der Transportstrecke ein mit Mitnehmern versehener Transportstab vorgesehen ist und die Mitnehmer auf dem Transportstab derart angeordnet sind, dass diese bei der Lastbewegung eine definierte Beabstandung der Rollwagen zueinander bewirken. Vorteilhafterweise kann die Förderstange gehoben und gesenkt werden, wobei die Bewegung derart ist, dass die Förderstange für die Lastbewegung angehoben wird und eine abgesenkte Rückholbewegung vollzieht.

In der Waren- und Produktlogistik gewinnen rollende Transportsysteme immer mehr an Bedeutung. Dies sind rollbare Paletten, so genannte Dollies. Ein derartiges Dolly ist in der DE 0 251 439 A2 gezeigt. Diese kleinen Rollwagen haben in der Regel eine Grundfläche, die der Hälfte oder einem Viertel einer EU-Palette entspricht, wobei von den vier Rollen üblicherweise ein Paar als Lenkräder darstellen, die um eine vertikale Achse drehbar gelagert sind. Das zweite Paar ist nicht lenkbar ausgeformt. EP 1 149 753 A2 zeigt einen derartigen Dolly, dort als Transportroller bezeichnet. Bei Mehrwegsystemen werden die Dollies auf einer Europalette gestapelt an den Lieferanten zurückgegeben und von diesem mit neuer Ware belegt. Die beladenen Rollwagen werden auf Transportpaletten, üblicherweise Europaletten, zusammengestellt, fixiert und erneut ausgeliefert.

Durch die kleine Grundfläche der Rollwagen ist es erforderlich, dass die nicht idealrechteckigen und/oder planparallelen Waren oder Chargen mittels Zwischenlagen und/oder seitlichen Versteifungselementen gesichert werden müssen. Bei manchen Waren muss zum Beladen der Dollies ein vierseitig greifendes Hub-und Transportwerkzeug eingesetzt werden, wozu seitlich ein ausreichender Freiraum platz bei dem Beladevorgang vorgesehen werden muss. Daher ist es zum Beladen erforderlich, die Rollwagen zu vereinzeln, um die Seitenflächen zugänglich zu machen.

DE 34 42 111 C2 offenbart eine Vorrichtung gemäss dem Oberbegriff des Anspruchs 1 und ein Verfahren, bei welchem mittels einer Transportstange, die mit Mitnehmern versehen ist, eine einzelne beladene Rollpalette gefördert wird. Die einzelstückige Förderung und Beladung eines Rollwagens verlangsamt das gesamte Be- und Entpalettierungsverfahren und erfordert bei der nachfolgenden neuen Beladung einer Transportpalette einen aufwändigen Verfahrensschritt, um die mit Waren hoch beladenen Rollwagen wieder zu gruppieren.

Aufgabe der Erfindung ist es daher, eine Vorrichtung und ein Verfahren zu offenbaren, bei welchem pro Zeiteinheit eine größere Anzahl von Rollwagen beladen werden kann.

Diese Aufgabe löst die vorliegende Erfindung mittels einer Belade- und Palettiervorrichtung für Rollwagen, insbesondere so genannte Dollies, gemäss Anspruch 1.

Vorteilhafterweise kann die Förderstange gehoben und gesenkt werden, wobei die Bewegung derart ist, dass die Förderstange für die Lastbewegung angehoben wird und eine abgesenkte Rückholbewegung vollzieht.

Eine vorteilhafte Ausgestaltung sieht vor, die Förderstange in Wirkverbindung mit einer mindestens teilweise parallel zur Förderstange laufenden Kette anzuordnen, wobei die Kette motorisch angetrieben wird und die Förderstange mitnimmt. Dabei kann die Förderstange auf Rollen und/oder in mindestens einer Schiene geführt sein.

Die Mitnehmer können eine beliebige Form aufweisen und sind im Wesentlichen von der Geometrie der Rollwagen abhängig. Idealerweise sind die Mitnehmer als Zapfen, Krallen oder dergleichen ausgebildet.

Eine Verbesserung besteht darin, dass mindestens ein Teil der Mitnehmer an der Förderstange exzentrisch gelagert und versenkbar sind. Durch diese Lagerung wird bewirkt, dass bei der Rückholbewegung entgegen der Förderrichtung, die Förderstange nur geringfügig abgesenkt werden muss oder auf eine Absenkung vollständig verzichtet werden kann.

Bei einer idealen Vorrichtung sind zwei oder mehr parallel verlaufende Transportstrecken vorgesehen. Dabei wird die Anzahl der parallelen Transportstrecken vorteilhafterweise derart gewählt, dass in der zugehörigen Beladestation genau die Anzahl von Rollwagen beladen werden kann, welche die Grundfläche mindestens einer nachfolgenden Transportpalette optimal ausfüllen. Somit werden beispielsweise bei Rollwagen, die ein Viertel der Grundfläche einer Europalette einnehmen, idealerweise zwei parallele Transportstrecken vorgesehen und mittels der Beladestation immer vier Rollwagen zeitgleich beladen.

Ein Verbesserung besteht darin, dass die zwei oder mehr Transportstrecken nicht parallel nebeneinander verlaufen, sondern in Richtung der Beladestation weiter voneinander beabstandet sind, als sie dieses vor oder nach der Beladestation sind. Auf diese Weise kann eine definierte, seitliche Beabstandung der Rollwägen zueinander im Bereich der Beladestation erfolgen und flexibel auf unterschiedliche Beladungserfordernisse reagiert werden. Stromabwärts der Beladestation werden die Bahnen der Transportstrecke wieder enger und parallel zueinander geführt.

Bei stark wechselndern Ware und damit der jeweiligen Beladeanforderungen kann es sinnvoll sein, vor und nach der Beladestation flexible Schienenelemente vorzusehen, so dass die Bahnen der Transportstreken im Bereich der Beladestation mittels eines Antriebes horizontal angenähert und/oder beabstandet werden können.

In der Regel ist stromaufwärts der Beladungsstation und der Transportstrecke eine Entpalettierungsvorrichtung angeordnet. Diese Entpalettierungsvorrichtung dient der schichtweisen Entnahme und Überleitung von Rollwagen auf die angrenzende Transportstrecke und der nachfolgenden Beladung. Als Entpalettierungsvorrichtung sind viele Vorrichtungen denkbar, wobei idealerweise die Entpalettierungsvorrichtung eine Hebevorrichtung umfasst, womit die zweite und gegebenenfalls weitere Schichten der gestapelten Rollwagen angehoben und gesenkt werden können.

Bezüglich der Beladestation besteht eine Verbesserung darin, dass diese eine Vorrichtung umfasst, mit welcher mindestens ein Stabilisierungselement und/oder Verpackungsmaterial auf oder an der Ware befestigt wird, insbesondere Stabilisierungselemente und/oder Verpackungsmaterialien, die mindestens an einer Seite von außen anliegen und damit eine Teilfläche der beladenen Ware überdecken. Dabei ist hier unter Seite die Fläche zu verstehen, welche sich senkrecht und ungefähr über den äußeren Rändern der Rollwagen erstreckt.

Weiterhin umfasst die Erfindung ein Verfahren zum Beladen von Rollwagen gemäss Anspruch 12, welches mindestens die Schritte der Zuleitung von Rollwagen zu einer Beladestation, das Beladen der Rollwagen in der Beladestation und den Abtransport hieraus umfasst, wobei eine Belade- und Palettiervorrichtung in einer der vorgenannten Ausführungsformen eingesetzt wird.

In einer vorteilhaften Verfahrensvariante werden die nachfolgenden Schritte durchlaufen:
a) Heranführen einer mit gestapelten Rollwagen beladenen Palette,
b) Anheben der gestapelten Rollwagen ohne die erste Stapelschicht,
c) Einfahren mindestens einer Förderstange unter mindestens zwei hintereinander stehende Rollwagen,
d) Einrasten oder Anschlagen der Mitnahmeelemente im oder am Rollwagen, insbesondere Rollwagenboden oder -rahmen,
e) Lastbewegung der Förderstange und der hieran arretierten Rollwagen zur Beladestation,
f) Parallele Beladung der Rollwagen,
g) Lastbewegung der Förderstange und der hieran arretierten Rollwagen zu einer nachfolgenden Transportstrecke und/oder zu einer Überleit- und/oder Palet-tierstation.

Das Verfahren kann dadurch verbessert werden, dass im Schritt f), der Beladung der Rollwagen, weiterhin eine Belegung mindestens eines Teils der äußeren Flächen der auf dem Rollwagen gestapelten Ware mit mindestens einem Stabilisierungselement und/oder Verpackungsmaterial erfolgt.

Idealerweise erfolgt das Verfahren derart, dass in Schritt c) zwei oder mehr Förderstangen unter hintereinander stehende Rollwagen einfahren, wobei idealerweise die Förderstangen parallel, das heißt im Wesentlichen zeitgleich einfahren und immer eine komplette Schicht an Rollwagen mitnehmen.

Somit kann mittels des vorliegenden Verfahrens durch die zeitgleiche Beladung von mehreren Rollwagen genau die Anzahl an Rollwagen beladen werden, die für eine Transportpalette bestimmt sind. Weiterhin besteht ein besonderer Vorteil der Vorrichtung und des Verfahrens darin, dass die Rollwagen nicht umgestellt, gedreht oder umgruppiert werden müssen, sondern im Durchlaufverfahren nach dem Beladen nur noch auf die bereitgestellte Transportpalette aufgeschoben werden und dort für den Transport fixiert und ggf. verpackt werden müssen.

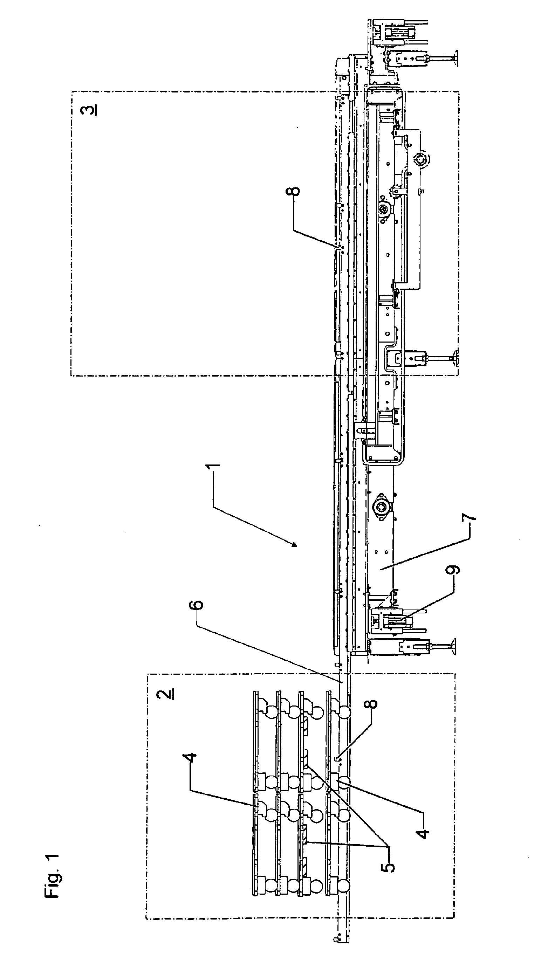

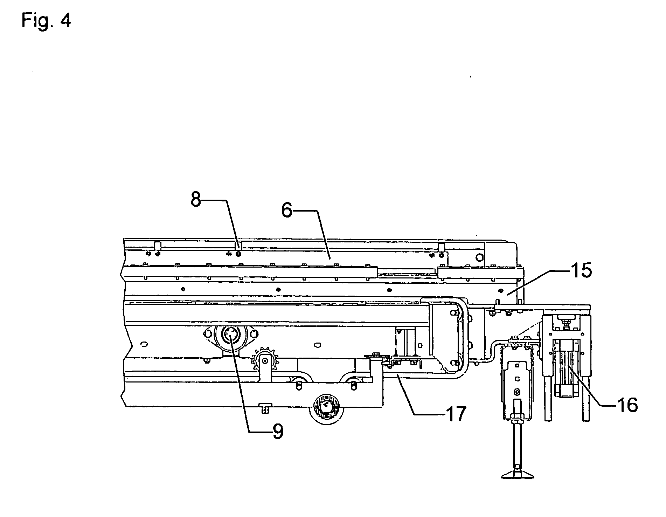

Die Figuren 1 bis 3 beschreiben die erfindungsgemäße Vorrichtung beispielhaft in drei unterschiedlichen Stadien des Verfahrens. Figur 4 ist eine Detaildarstellung der Antriebselemente der Transportstrecke.

Fig. 1 zeigt die allgemein mit 1 bezeichnete Belade- und Palettiervorrichtung für Rollwagen, eine Entpalettierungsvorrichtung 2 und die Beladestation 3, dabei sind die Entpalettierungsvorrichtung 2 und die Beladestation 3 nur als strichpunktierte Bereiche schematisch angedeutet. Mittels der Entpalettierungsvorrichtung 2 werden schichtweise Rollwagen 4 abgesetzt, wobei mittels einer Hebevorrichtung die restlichen Rollwagen angehoben werden. Von der Hebevorrichtung sind in der Draufsicht nur die Hubzinken 5 dargestellt, auf denen die restlichen Rollwagen 4 ruhen. In der dargestellten Vorrichtung ist der Transportstab 6 der Transportstrecke 7 unter die zu befördernden Rollwagen 4 geführt und befindet sich noch in abgesenkter Position, so dass die zapfenartigen Mitnehmer 8 noch vertikal von dem Boden der Rollwagen beabstandet sind.

Aus dieser Position beginnt der Transport und die Überführung der Rollwagen auf die Transportstrecke 7, in dem die Förderstange 6 angehoben wird und in Richtung der Beladestation 3 bewegt wird.

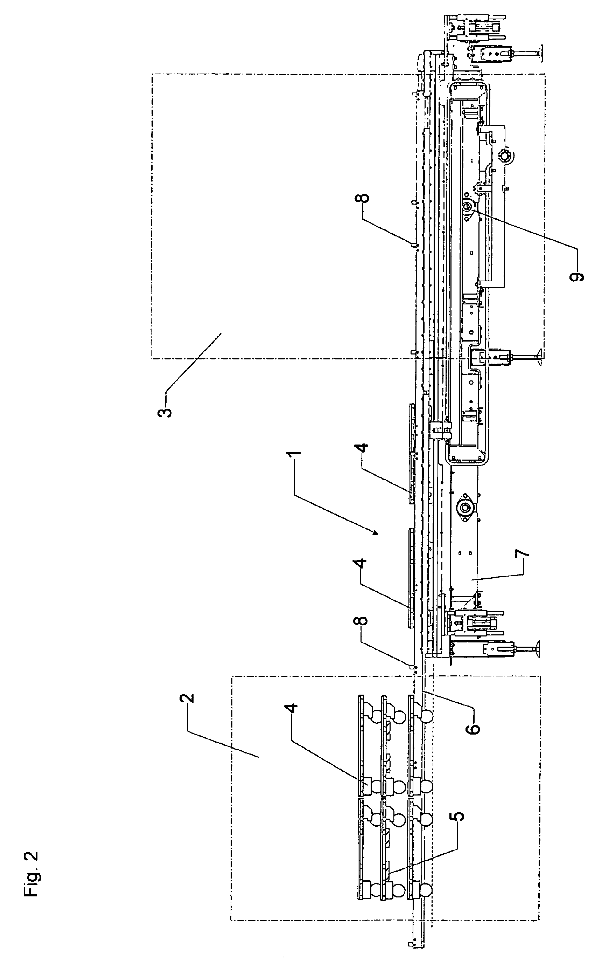

In Fig. 2 ist die Vorrichtung in einer Position gezeigt, in welcher die Förderstange 6 angehoben ist und sich zwei Rollwagen 4 auf der Transportstrecke 7 direkt vor der Beladestation 3 befinden und zwei Rollwagen 4 im Bereich der Entpalettierungsvorrichtung 2 bereitstehen. Die Transportstrecke weist zwei nicht dargestellte U-förmige, parallele Schienen auf, in denen die Rollen der Rollwagen 4 geführt werden. Zu erkennen ist deutlich, dass die auf der Transportstrecke 7 befindlichen Rollwagen 4 auf eine größere Beabstandung gebracht wurden, als dies im Bereich der Entpalettierungsvorrichtung 2 der Fall ist. Dieser definierte Abstand wird auf der gesamten Transportstrecke 7 beibehalten.

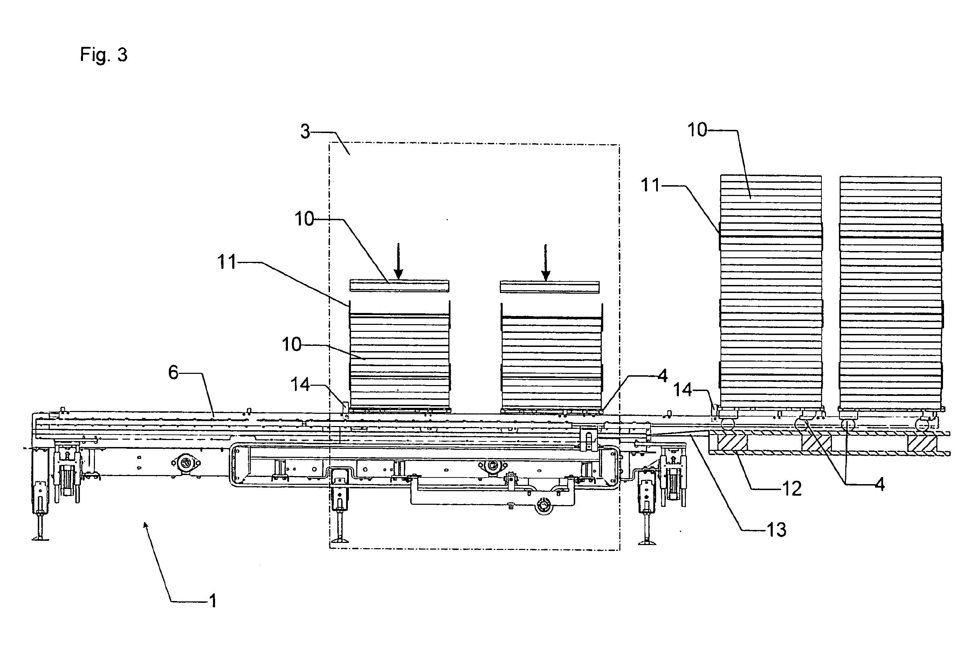

Die Beladung der Rollwagen 4 ist in der Fig. 3 dargestellt. Die in der Beladestation 3 befindlichen Rollwagen 4 sind ungefähr bis zur Hälfte mit Ware 10 beladen, wobei mehrere Stabilisierungselemente 11 bei der Beladung vorgesehen werden. Diese werden üblicherweise als Flachmaterial aufgelegt und dann in geeigneter Weise an den Seiten heruntergeklappt. In der dargestellten Variante bilden die Stabilisierungselemente 11 durch entsprechende Perforierung und Schnittmuster bei dem Klappvorgang ein Doppel-T-Profil aus. Das Hebewerkzeug ist aus Gründen der Übersichtlichkeit nicht dargestellt, und die Pfeile deuten eine Bewegungsrichtung der Hebewerkzeuge an.

Stromabwärts der Beladestation 3 ist eine Überleitstation angeordnet, in der die vollen Rollwagen 4 auf eine Transportpalette 12 geschoben werden. Für diese Überleitung werden die Rollwagen 4 am Ende der Förderstrecke 7 auf eine Rampe 13 geschoben, so dass sich der vordere Rollwagen 4 von den Mitnehmern 8 löst und vom nachfolgenden Rollwagen 4 auf Stoß geschoben wird. Für die vollständige Überleitung des nachfolgenden, schiebenden Rollwagens 4 ist auf der Förderstange ein Endmitnehmer 14 vorgesehen, der den hinteren Rollwagen 4 bis zu dessen Endposition auf der Palette 12 anschiebt. Dieser Endmitnehmer 14 ist länger als die Mitnehmer 8 und ragt somit stärker über die Förderstange 6 heraus. In dem gezeigten Beispiel sind die Mitnehmer 8 starr an der Förderstange 6 befestigt und die Endmitnehmer 14 exzentrisch an der Förderstange 6 gelagert, so dass sich diese bei der abgesenkten Rückholbewegung einklappen. Das Ausklappen des Endmitnehmers 14 wird durch eine nicht dargestellte Steuernocke im Bereich der Befüllstation ausgelöst.

Fig. 4 zeigt das Antriebssystem der Förderstange 6. Die Förderstange ist auf einem Träger 15 gelagert, der mittels Hubzylindern 16 gehoben und gesenkt werden kann. Die Förderstange 6 ist über geschlitzte Mitnehmer (nicht dargestellt) mit einer umlaufenden Förderkette 17 verbunden, die von den Servomotoren 9 links- und rechtsdrehend angetrieben wird.

Ein besonderer Vorteil der erfindungsgemäßen Vorrichtung und des Verfahrens besteht darin, dass mehrere Entpalettierungsvorrichtung 2 und Beladestationen 3 in Reihe angeordnet werden können, was zu einer weiteren Beschleunigung der Beladung führt. Durch den Antrieb der Förderketten mittels Servomotoren können die Rollwagen sehr vorsichtig beschleunigt und abgebremst werden.

## Patentansprüche

1. Belade- und Palettiervorrichtung für Rollwagen (4), insbesondere so genannte Dollies, umfassend
- mindestens eine mit mindestens einer Führungsschiene ausgestatteten Transportstrecke (7), in welcher Rollwagen verfahrbar sind und in der Transportstrecke (7) ein mit Mitnehmern (8) versehener Transportstab (b) vorgesehen ist
- eine Beladestation (3) für Rollwagen (4), in welcher Waren auf mindestens zwei hintereinander stehende Rollwagen (4) gleichzeitig aufgestapelt werden können und
- eine Überleitstation, in welcher die vollständig beladenen Rollwagen entnommen werden, wobei die Überleitstation idealerweise eine Palettierstation darstellt, **dadurch gekennzeichnet, dass** in der Überleitstation die Rollwagen auf mindestens einer Palette positioniert werden ,
und dass der Transport stab (6) direkt oder indirekt in Wirkverbindung mit einem Motor, pneumatischen Agitator, hydraulischen Agitator oder dergleichen steht und hiervon antreibbar ist, wobei die Mitnehmer auf dem Transportstab derart angeordnet sind, dass diese bei der Lastbewegung eine definierte Beabstandung der Rollwagen zueinander bewirken.

2. Vorrichtung nach Anspruch 1, **dadurch gekennzeichnet, dass** der Transportstab eine Förderstange ist, und wobei die Förderstange (6) eine gehobene Lastbewegung und eine abgesenkte Rückholbewegung vollzieht.

3. Vorrichtung nach Anspruch 1 oder 2, **dadurch gekennzeichnet, dass** die Förderstange oder der Transportstab in Wirkverbindung mit einer mindestens teilweise parallel zur Förderstange laufenden Kette steht, wobei die Kette motorisch angetrieben wird und die Förderstange antreibt.

4. Vorrichtung nach einem der Ansprüche 1 bis 3, **dadurch gekennzeichnet, dass** die Förderstange oder der Transportstab auf Rollen und/oder in mindestens einer Schiene oder Träger geführt ist.

5. Vorrichtung nach einem der Ansprüche 1 bis 4, **dadurch gekennzeichnet, dass** die Mitnehmer Zapfen, Krallen oder dergleichen sind.

6. Vorrichtung nach einem der Ansprüche 1 bis 5, **dadurch gekennzeichnet, dass** mindestens ein Teil der Mitnehmer (8) exzentrisch gelagert und versenkbar sind.

7. Vorrichtung nach einem der Ansprüche 1 bis 6, **dadurch gekennzeichnet, dass** die zwei oder mehr Transportstrecken (7) parallel verlaufen und idealerweise die Anzahl der parallelen Transportstrecken derart ist, dass in der zugehörigen Beladestation eine Anzahl von Rollwagen (4) beladen werden kann, welche die Grundfläche mindestens einer Transportpalette optimal ausfüllen.

8. Vorrichtung nach einem der Ansprüche 1 bis 7, **dadurch gekennzeichnet, dass** die zwei oder mehr Transportstrecken (7) nicht parallel nebeneinander verlaufen, sondern in Richtung der Beladestation (3) weiter voneinander beabstandet sind, als stromaufwärts der Beladestation (3) und auf diese Weise eine definierte Beabstandung der Rollwagen (4) zueinander im Bereich der Beladestation erfolgt, wobei die Transportstrecken (7) stromabwärts der Beladestation idealerweise enger und parallel zueinander verlaufen.

9. Vorrichtung nach einem der Ansprüche 1 bis 8, **dadurch gekennzeichnet, dass** stromaufwärts der Beladungsstation (3) und der Transportstrecke (7) eine Entpalettierungsvorrichtung angeordnet ist, und diese Entpalettierungsvorrichtung (2) idealerweise für die schichtweise Entnahme und Überleitung von Rollwagen auf die angrenzende Transportstrecke geeignet ist.

10. Vorrichtung nach Anspruch 9, **dadurch gekennzeichnet, dass** die Entpalettierungsvorrichtung (2) eine Hebevorrichtung umfasst, womit die zweite Schicht und gegebenenfalls weiteren Schichten angehoben und gesenkt werden können.

11. Vorrichtung nach einem der Ansprüche 1 bis 10, **dadurch gekennzeichnet, dass** die Beladestation (3) eine Vorrichtung umfasst, mittels welcher mindestens ein Stabilisierungselement (11) und/oder Verpackungsmaterial auf oder an der Ware befestigt wird, insbesondere Stabilisierungselemente (11) und/oder Verpackungsmaterialien, die mindestens an einer Seite der Ware von außen anliegen.

12. Verfahren zum Beladen von Rollwagen, umfassend die Schritte Zuleiten von Rollwagen (4) zu einer Beladestation (3), Beladen der Rollwagen (4) in der Beladestation (3), Abtransport hieraus, **dadurch gekennzeichnet, dass** eine Belade- und Palettiervorrichtung gemäß einem der Ansprüche 1 bis 9 verwendet wird.

13. Verfahren nach Anspruch 12, **dadurch gekennzeichnet, dass** die nachfolgenden Schritte durchlaufen werden:
a) Heranführen einer mit gestapelten Rollwagen (4) beladenen Palette,
b) Anheben der gestapelten Rollwagen (4) ohne die unterste Stapelschicht,
c) Einfahren der mindestens einen Förderstange (6) unter mindestens zwei hintereinander stehende Rollwagen,
d) Einrasten oder Anstoßen mindestens eines Mitnahmeelementes im oder an jedem Rollwagen, insbesondere im oder an den Rollwagenböden oder - rahmen,
e) Lastbewegung der Förderstange (6) und der hieran arretierten Rollwagen zur Beladestation,
f) Parallele Beladung der Rollwagen (4),
g) Lastbewegung der Förderstange (6) und der hieran arretierten Rollwagen (4) zu einer nachfolgenden Transportstrecke oder Überleitstation.

14. Verfahren nach Anspruch 13, **dadurch gekennzeichnet, dass** im Schritt f) weiterhin eine Belegung mindestens eines Teils der äußeren Flächen der auf dem Rollwagen (4) gestapelten Ware mit mindestens einem Stabilisierungselement (11) und/oder Verpackungsmaterial erfolgt.

15. Verfahren nach einem der Ansprüche 13 oder 14, **dadurch gekennzeichnet, dass** in Schritt c) zwei oder mehr Förderstangen (6) unter hintereinander stehende Rollwagen (4) einfahren, wobei idealerweise die Förderstangen parallel einfahren und immer eine komplette Schicht an Rollwagen (4) mitnehmen.

## Claims

1. A loading and palletizing device for roll wagons (4); in particular "dollies", comprising
- at least one transport section (7) having at least one guide rail, in which transport section roll wagons can be conveyed and a transport bar (6) equipped with carriers 8) is provided for in the transport section (7);
- a loading station (3) for roll wagons (4), into which wares can be loaded simultaneously onto at least two roll wagons arranged in series; and
- one transfer station, in which the fully loaded roll wagons are removed, wherein the transfer station ideally constitutes a palletizing station, **characterized in that** the roll wagons are positioned on at least one pallet in the transfer station;
and that the transport bar (6) directly or indirectly interactively connects with a motor, pneumatic agitator, hydraulic agitator or the like and is driven by the latter, wherein the carriers (8) on the transport bar (6) are arranged in such a way that, when moving under the load, the latter bring about a pre-defined distance of the roll wagons to one another.

2. A device as claimed in claim 1, **characterised in that** the transport bar is a conveying bar, and in regard to which the conveying bar is raised for moving the load and performs a lowered return movement.

3. A device as claimed in claim 1 or 2, **characterised in that** the conveying bar (6) or the transport bar interactively connects with a moving chain that is at least partially parallel to the conveying bar (6), wherein the chain is driven by a motor and powers the conveying bar.

4. A device as claimed in any one of claims 1 to 3, **characterised in that** the conveying bar or the transport bar is designed on castors and/or at least in a rail or girder.

5. A device as claimed in any one of claims 1 to 4, **characterised in that** the carriers are catches, claws or the like.

6. A device as claimed in any one of claims 1 to 5, **characterised in that** at least one part of the carriers (8) is mounted excentrically and can be lowered.

7. A device as claimed in any one of claims 1 to 6, **characterised in that** the two or more transport sections (7) run in parallel to one another and ideally the number of parallel transport sections is such that a number of roll wagons (4) which optimally fill out the base of at least one shipping pallet can be loaded in the associated loading station.

8. A device as claimed in any one of claims 1 to 7, **characterised in that** the two or more transport sections (7) do not run alongside one another in parallel, but are at a greater distance from one another in the direction of the loading station (3) than upstream from the loading station (3), and in this way a defined distance between the roll wagons (4) occurs in the area of the loading station, wherein the transport sections (7) downstream from the loading station are ideally closer to one another and run in parallel to one another.

9. A device as claimed in any one of claims 1 to 8, **characterised in that** a depalletizing device (2) is placed upstream from the loading station (3) and the transport section (7), and that this depalletizing device is ideally suited to removing and transferring roll wagons to the adjacent transport section, layer by layer.

10. A device as claimed in claim 9, **characterised in that** the depalletizing device (2) comprises hoisting gear, with which the second layer and any further layers can be lifted and lowered.

11. A device as claimed in any one of claims 1 to 10, **characterised in that** the loading station (3) comprises a device by means of which at least one stabilising element (11) and/or packaging material is attached to the wares, in particular stabilising elements (11) and/or packaging materials which at least adjoin one side of the wares externally.

12. A method for loading roll wagons, comprising the steps of advancing roll wagons (4) to a loading station (3), loading the roll wagons (4) at the loading station (3), and transporting them away from it, **characterised in that** a loading and palletizing device as per one of Claims 1 to 9 is used.

13. A method as claimed in claim 12, **characterised in that** the following is carried out:
a) Advancing a pallet loaded with stacked-up roll wagons (4);
b) Lifting up the stacked-up roll wagons (4) without including the lowest layer of the stack;
c) Inserting at least one conveying bar (6) under at least two roll wagons connected in series;
d) Locking in or jolting at least one carrier element into or onto each roll wagon, in particular into or onto the floors or frameworks of the roll wagons.
e) Moving the conveying bar (6) and the roll wagons locked into it under the load towards the loading station;
f) Loading the roll wagons (4) in parallel;
g) Moving the conveying bar (6) and the roll wagons (4) locked into it under the load to a transport section or transfer station located beyond it.

14. A method as claimed in claim 13, **characterised in that**, in Step f), moreover at least one stabilising element (11) and/or the packaging material is put onto at least a part of the external surfaces of the wares stacked up on the roll wagons (4).

15. A method as claimed in claims 13 or 14, **characterised in that**, in Step c), two or more conveying bars (6) are inserted under roll wagons (4) connected in series, in regard to which ideally the conveying bars are inserted in parallel and always carry along with them a complete layer of roll wagons (4).

## Revendications

1. Dispositif de chargement et de palettisation pour des chariots roulants (4), en particulier pour les supports à roulettes tels qu'on les désigne, comportant
- au moins une ligne de transport (7) équipée d'au moins un rail de guidage, sur laquelle des chariots roulants peuvent être déplacés et sur la ligne de transport (7) est prévue une barre de transport (6) munie de dispositifs d'entraînement (8)
- une station de chargement (3) pour des chariots roulants (4), sur laquelle des marchandises peuvent être empilées simultanément sur au moins deux chariots roulants (4) se trouvant l'un derrière l'autre et
- une station de transfert, dans laquelle les chariots roulants complètement chargés sont réceptionnés, la station de transfert constituant idéalement une station de palettisation,
**caractérisé en ce que** les chariots roulants sont positionnés dans la station de transfert, sur au moins une palette,
et **en ce que** la barre de transport (6) est en liaison fonctionnelle directement ou indirectement avec un moteur, un agitateur pneumatique, un agitateur hydraulique ou similaire et peut être entraînée par ces derniers, les dispositifs d'entraînement (8) étant disposés sur la barre de transport (6) de telle manière qu'ils provoquent dans le cas du déplacement du chargement un espacement défini entre les chariots roulants.

2. Dispositif selon la revendication 1, **caractérisé en ce que** la barre de transport est une tige de convoyage, et la tige de convoyage (6) exécutant une élévation du chargement et un abaissement pour le mouvement de retour.

3. Dispositif selon la revendication 1 ou 2, **caractérisé en ce que** la tige de convoyage ou la barre de transport se trouve en liaison fonctionnelle avec une chaîne se déplaçant au moins en partie de manière parallèle par rapport à la tige de convoyage (6), la chaîne étant entraînée de manière motorisée et entraînant la tige de convoyage.

4. Dispositif selon l'une quelconque des revendications 1 à 3, **caractérisé en ce que** la tige de convoyage ou la barre de transport est guidée sur des roulettes et/ou dans au moins un rail ou un support.

5. Dispositif selon l'une quelconque des revendications 1 à 4, **caractérisé en ce que** les dispositifs d'entraînement sont des tourillons, des griffes ou similaire.

6. Dispositif selon l'une quelconque des revendications 1 à 5, **caractérisé en ce qu'**au moins une partie des dispositifs d'entraînement (8) sont logés de manière excentrique ou de manière à pouvoir être abaissés.

7. Dispositif selon l'une quelconque des revendications 1 à 6, **caractérisé en ce que** deux lignes de transport (7) ou plus s'étendent de manière parallèle et idéalement le nombre de lignes de transport parallèles est tel qu'un certain nombre de chariots roulants (4) peut être chargé dans la station de chargement associée, ces chariots roulants remplissant de manière optimale la surface de base d'au moins une palette de transport.

8. Dispositif selon l'une quelconque des revendications 1 à 7, **caractérisé en ce que** les deux lignes de transport (7) ou plus ne s'étendent pas les unes à côté des autres de manière parallèle, mais sont espacées les unes des autres en direction de la station de chargement (3), en amont de la station de chargement (3), et **en ce que** de cette manière un espacement défini des chariots roulants (4) les uns par rapport aux autres a lieu dans la zone de la station de chargement, les lignes de transport (7) s'étendant en aval de la station de chargement, idéalement de manière rapprochée et de manière parallèle les unes par rapport aux autres.

9. Dispositif selon l'une quelconque des revendications 1 à 8, **caractérisé en ce qu'**un dispositif de dépalettisation est disposé en amont de la station de chargement (3) et de la ligne de transport (7), et **en ce que** ledit dispositif de dépalettisation (2) est approprié de manière idéale pour le retrait par étages et le transfert de chariots roulants sur la ligne de transport adjacente.

10. Dispositif selon la revendication 9, **caractérisé en ce que** le dispositif de dépalettisation (2) comporte un dispositif de levage, qui permet d'élever et d'abaisser le deuxième étage et éventuellement les autres étages.

11. Dispositif selon l'une quelconque des revendications 1 à 10, **caractérisé en ce que** la station de chargement (3) comporte un dispositif, lequel permet de fixer au moins un élément de stabilisation (11) et/ou un matériau d'emballage sur ou au niveau de la marchandise, les éléments de stabilisation (11) et/ou les matériaux d'emballage se trouvant à l'extérieur sur un côté de la marchandise.

12. Procédé servant à charger des chariots roulants, comportant les étapes suivantes consistant à diriger les chariots roulants (4) en direction d'une station de chargement (3), à charger les chariots roulants (4) dans la station de chargement (3), à réacheminer de là les chariots roulants, **caractérisé en ce qu'**on utilise un dispositif de chargement et de palettisation selon l'une quelconque des revendications 1 à 9.

13. Procédé selon la revendication 12, **caractérisé en ce que** se déroulent les étapes suivantes consistant à :
a) rapprocher une palette chargée de chariots roulants (4) empilés,
b) soulever les chariots roulants (4) empilés sans l'étage le plus bas de l'empilement,
c) placer la tige de convoyage (6) au moins au nombre de une sous au moins deux chariots roulants se trouvant l'un derrière l'autre,
d) enclencher au moins un élément d'entraînement dans le chariot roulant ou en pousser au moins un contre chaque chariot roulant, en particulier dans ou au niveau des bases ou cadres des chariots roulants,
e) déplacer le chargement de la tige de convoyage (6) et des chariots roulants bloqués au niveau de celle-ci en direction de la station de chargement,
f) charger de manière parallèle les chariots roulants (4),
g) déplacer le chargement de la tige de convoyage (6) et des chariots roulants (4) bloqués au niveau de celle-ci en direction d'une ligne de transport qui suit ou d'une station de transfert.

14. Procédé selon la revendication 13, **caractérisé en ce que** l'étape f) comprend également l'équipement d'au moins une partie des surfaces extérieures de la marchandise empilée sur le chariot roulant (4), d'au moins un élément de stabilisation (11) et/ou d'un matériau d'emballage.

15. Procédé selon l'une quelconque des revendications 13 ou 14, **caractérisé en ce qu'**à l'étape c), deux tiges de convoyage (6) ou plus sont placées sous des chariots roulants (4) se trouvant les uns derrière les autres, sachant qu'idéalement les tiges de convoyage se déplacent de manière parallèle et entraînent systématiquement un étage complet de chariots roulants (4).
